Europäisches Patentamt

European Patent Office

Office européen des brevets

(19)

(11) Veröffentlichungsnummer: **0 150 354**
**B1**

(12) **EUROPÄISCHE PATENTSCHRIFT**

(45) Veröffentlichungstag der Patentschrift: **31.10.90**

(21) Anmeldenummer: **84114891.9**

(22) Anmeldetag: **07.12.84**

(51) Int. Cl.⁵: **G 01 B 5/00**

(54) **Längen- oder Winkelmesseinrichtung.**

(30) Priorität: **14.01.84 DE 3401141**

(43) Veröffentlichungstag der Anmeldung:
**07.08.85 Patentblatt 85/32**

(45) Bekanntmachung des Hinweises auf die
Patenterteilung:
**31.10.90 Patentblatt 90/44**

(84) Benannte Vertragsstaaten:
**AT CH DE FR GB IT LI NL SE**

(56) Entgegenhaltungen:
**DE-A-3 301 037**
**FR-A-2 308 907**
**FR-A-2 311 273**

(73) Patentinhaber: **Dr. Johannes Heidenhain GmbH**
**Dr.-Johannes-Heidenhain-Strasse 5 Postfach**
**1260**
**D-8225 Traunreut (DE)**

(72) Erfinder: **Tute, Rainer**
**Lindenstrasse 6**
**D-8221 Traunwalchen (DE)**

EP 0 150 354 B1

Courier Press, Leamington Spa, England.

## Beschreibung

Die Erfindung bezieht sich auf eine Längen- oder Winkelmeßeinrichtung mit Fehlerkompensationseinrichtung nach dem Oberbegriff des Anspruchs 1.

Aus der DE-OS 32 24 005 ist es bekannt, einen Teilungsträger mit Ausnehmungen zu versehen, in denen Elemente angreifen, mit denen die Längsspannungen im Teilungsträger variiert werden können. Dieser Teilungsträger ist ein in sich geschlossenes System, das im abgeglichenen Zustand in das Meßsystem eingebaut werden kann.

Es sind darüber hinaus zahlreiche Wegmeßeinrichtungen mit Fehlerkompensationseinrichtungen bekannt, bei denen sich die Verstelleinrichtungen zur Kompensation der Fehler an einer Basis abstützen und die effektive Länge der Meßteilung durch die Verstelleinrichtungen veränderbar ist.

So ist es aus der DE-PS 25 18 745 bekannt, durch Zug oder Druck an den Stirnseiten einer biegesteifen Maßverkörperung diese in ihrer gesamten Länge gleichmäßig zu dehnen oder zu stauchen. Damit sind lineare Fehler zu kompensieren.

Aus der DE-AS 27 35 154 ist es bekannt, nichtlineare Fehler dadurch zu kompensieren, daß die Meßteilung senkrecht zur Teilungsebene auslenkbar ist. Die Meßteilung wird dadurch "verbogen", was an der Stelle der Auslenkung zu Dehnungen oder zu Stauchungen führt, da die Randzonen des Teilungsträgerkörpers, an dessen Oberfläche sich die Meßteilung befindet, länger oder kürzer werden. Dort wird in Spalte 4, Zeilen 23 bis 30 beschrieben, wie die zu kompensierenden Fehler festgestellt werden können.

Diesen Einrichtungen haften verschiedene Nachteile an. So ist es gemäß DE-PS 25 18 745 nur möglich, lineare Fehler zu kompensieren. Gemäß DE-AS 27 35 154 ist es schwierig, die Abtastung durchzuführen, da sich durch die Verbiegungen des Maßstabes senkrecht zur Teilungsebene der Abtastabstand ständig verändert.

Dieser Nachteil kann gemäß Figur 4 der DE-AS 27 35 154 durch eine direkte Führung der Abtasteinheit am Maßstab vermieden werden, jedoch ist dann eine aufwendige Ankopplung der Abtasteinheit an den Mitnehmer des einen zu messenden Objektes notwendig, da die Abtasteinheit nicht auf einer ebenen Fläche geführt wird.

Der Erfindung liegt die Aufgabe zugrunde, eine Meßeinrichtung mit einer Fehlerkompensationseinrichtung zu schaffen, die nicht nur konstante Fehler über die gesamte Meßlänge ausgleichen kann, sondern die auch partielle Fehlerkompensation erlaubt und die dennoch nur einen einfachen Aufbau der Meßeinrichtung erfordert. Insbesondere sollen an die Ankopplung der Abtasteinheit keine ungewöhnlichen Anforderungen gestellt werden müssen.

Diese Aufgabe wird durch die im Anspruch 1 angegebenen Merkmale gelöst.

Die besonderen Vorteile der Erfindung liegen darin, daß der Meßteilungsträger bereits vor dem Aufbringen der Meßteilung durch mechanische oder chemische Verfahren mit den Ausnehmungen versehen werden kann. Anschließend kann eine thermische Behandlung des Trägerkörpers durchgeführt und die Meßteilung aufgebracht werden.

Gegebenenfalls ist es möglich, ein Stahlband bereits perforiert beim Hersteller zu beziehen, das als Standart-Trägerkörper am Lager gehalten wird.

Mit Hilfe von Ausführungsbeispielen soll die Erfindung anhand der Zeichnungen noch näher erläutert werden.

Es zeigen

Figur 1 eine teilweise geschnittene Längenmeßeinrichtung mit Kompensationseinrichtungen,

Figur 2 eine Längenmeßeinrichtung gemäß Figur 1 im Querschnitt entlang der Linie II/II,

Figur 3 eine Draufsicht auf die Längenmeßeinrichtung gemäß Figur 2,

Figur 4 eine Variante der in Figur 1 bis Figur 3 gezeigten Längenmeßeinrichtung mit zentraler Perforation,

Figur 5 eine Draufsicht auf eine Längenmeßeinrichtung mit Kompensationseinrichtungen und seitlichen Ausnehmungen und

Figur 5a ein Detail aus Figur 5.

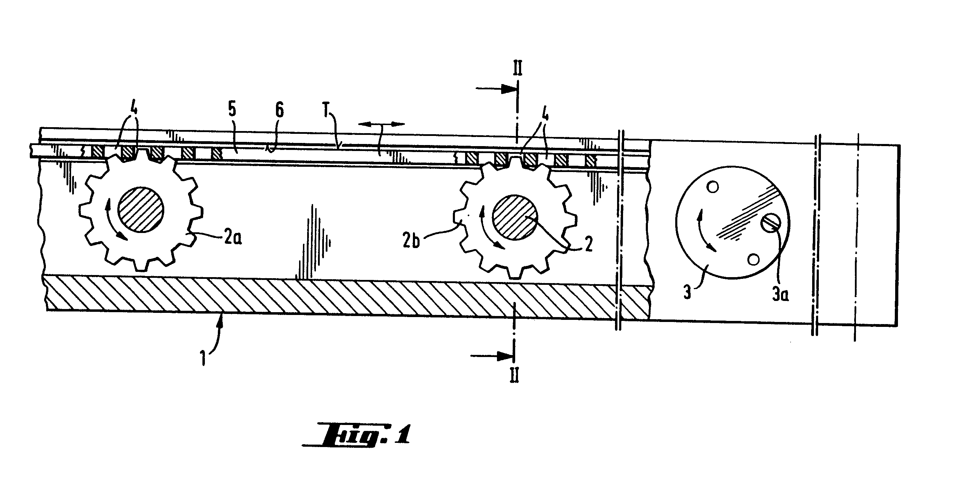

In Figur 1 ist eine Längenmeßeinrichtung dargestellt, bei der eine Basis 1 vorgesehen ist, in der Zahnräder 2a, 2b drehbar gelagert sind. Die Zahnräder 2a und 2b dienen als Verstelleinrichtungen und werden über eine Einstellscheibe 3, die jedem der Zahnräder 2a und 2b zugeordnet ist, verstellt. Die Zähne der Zahnräder 2a und 2b greifen in Ausnehmungen 4 ein, die sich entlang der Meßteilung in einem Meßteilungsträger 5 befinden. Der Meßteilungsträger 5 ist geringfügig längsverschieblich in einer Nut 6 in der Basis 1 gelagert. Im allgemeinen wird der Meßteilungsträger 5 an einem Ende fest mit der Basis 1 verbunden. Das kann durch Verschrauben, Kleben, Punktschweißen oder dgl. geschehen. Am anderen Ende kann der Meßteilungsträger 5 vorteilhaft in bekannter Weise auch über eine Spannvorrichtung an der Basis 1 befestigt sein.

Durch einzelnes Verdrehen der Einstellscheiben 3 kann mit den im Eingriff befindlichen Zähnen der Zahnräder 2a und 2b der Meßteilungsträger 5 partiell gedehnt oder gestaucht werden.

Durch synchrones Verdrehen der verschiedenen Einstellscheiben 3 läßt sich eine über die Gesamtlänge des Meßteilungsträgers 5 gleichmäßige Dehnung oder Stauchung erzielen, so daß auch lineare Fehler kompensiert werden können.

Es lassen sich jedoch die Gesamt-Kompensation und die partielle Kompensation auch kombinieren, indem außer einer linearen Dehnung oder Stauchung der Meßteilungsträger 5 zusätzlich durch einzelne Verstelleinrichtungen 2a oder 2b partiell gedehnt oder gestaucht wird.

Nach vollendeter Einstellung werden die Zahnräder 2a und 2b in ihrer Stellung fixiert, was durch Klemmschrauben 3a in den Einstellscheiben 3 bewirkt wird.

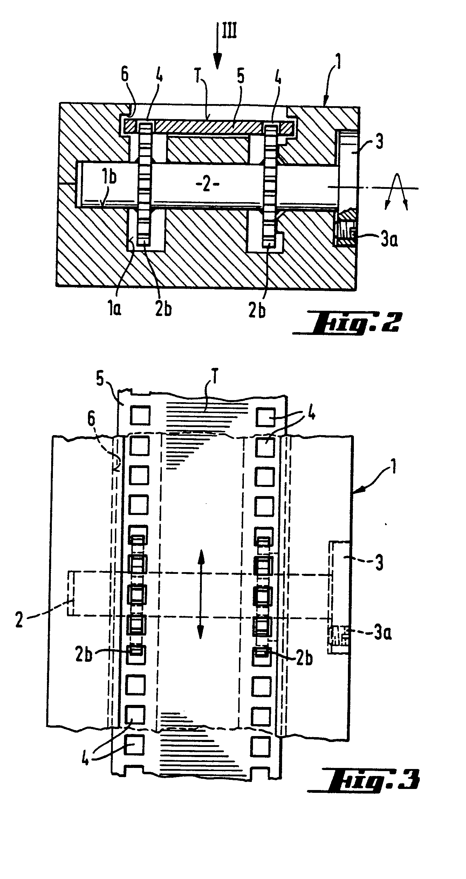

In Figur 2 ist ein Querschnitt durch die Meßeinrichtung gemäß Figur 1 an der Stelle II/II gezeigt. In der Basis 1 sind Schlitze 1a und Bohrungen 1b vorgesehen, in denen die Verstelleinrichtungen in Form von Zahnrädern 2b angeordnet sind. Die gemeinsame Welle 2 der Zahnräder 2b weist die bereits beschriebene Einstellscheibe 3 auf, mit deren Hilfe sie verdreht werden kann.

In der Basis 1 ist ferner eine Nut 6 vorgesehen, die sich in Längsrichtung der Basis 1 erstreckt. Der Meßteilungsträger 5 ist in diese Nut 6 eingeschoben und an den Enden der Basis 1 in bekannter Weise befestigt. Auf eine nähere Darstellung wurde hier verzichtet, da die Art der endseitigen Befestigung des Meßteilungsträgers 5 nicht zu der Erfindung beiträgt. Der Meßteilungsträger 5 ist an seinen Außenbereichen mit Ausnehmungen 4 versehen, die sich über die gesamte Meßlänge periodisch fortsetzen können. Diese Art der Ausnehmungen 4 ähnelt der Art, in der beispielsweise Kleinbildfilme perforiert sind.

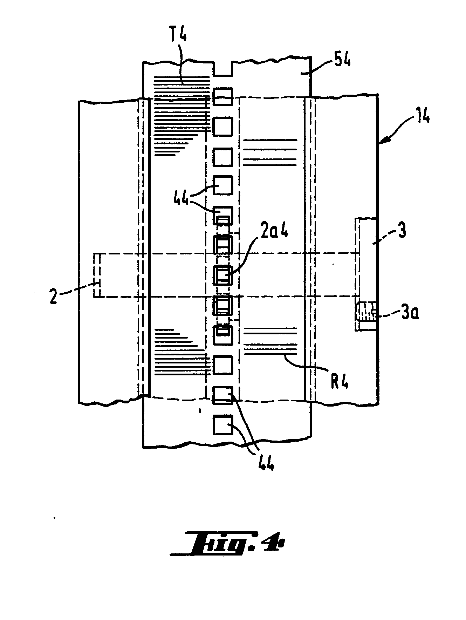

Zur Verdeutlichung trägt hier die Figur 3 bei, die eine Draufsicht auf die Meßeinrichtung gemäß Figur 2 darstellt.

Wenn die Meßteilung T Fehler in ihrer Länge aufweist, oder wenn die Führung der zu messenden, relativ zueinander beweglichen Objekte Fehler aufweist, können diese Fehler kompensiert werden, indem die effektive Länge der Meßteilung T verändert wird.

Dazu wird die Einstellscheibe 3 je nach Fehlerverlauf gedreht, wodurch die Zähne der Zahnräder 2b in die Ausnehmungen 4 eingreifen und den Meßteilungsträger 5 dehnen oder stauchen. Der Abstand der Teilungsstriche der Meßteilung T wird dadurch verändert, so daß sich die Fehler kompensieren lassen.

Dieser Vorgang kann - wie schon zu Figur 1 erwähnt partiell oder über größere Bereiche der zu messenden Länge durchgeführt werden.

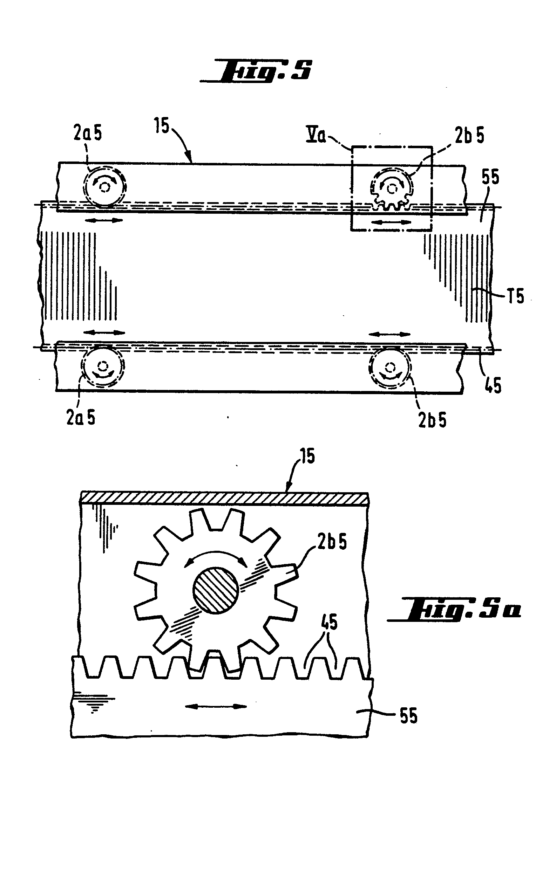

Eine Variante der erfindungsgemäßen Längenmeßeinrichtung ist in Figur 4 gezeigt. Die Ausnehmungen 44 sind etwa mittig zum Meßteilungsträger 54 angeordnet. Die Meßteilung T4 ist auf einer Seite der Perforation vorgesehen, während auf der anderen Seite der Perforation eine Spur mit Referenzmarken R4 aufgebracht ist. Hinsichtlich der Gestaltung und des Zweckes der Referenzmarken soll hier auf die einschlägige Patentliteratur, beispielsweise auf die DE-PS 19 64 381 verwiesen werden.

Die Funktion der Verstelleinrichtungen 2a4 entspricht sinngemäß der bereits beschriebenen Kompensationseinrichtung.

In Figur 5 ist eine Meßeinrichtung ausschnittsweise dargestellt, bei der die Ausnehmungen 45 unmittelbar an den Längskanten des Meßteilungsträgers 55 angebracht sind, so daß eine Art Zahnstange entsteht, wie das in der Detailvergrößerung aus Fig. 5a ersichtlich ist.

In der Ebene des Meßteilungsträgers 55 greifen Zahnräder 2a5 und 2b5 in diese Zahnstangen 45 ein und ermöglichen eine Fehlerkompensation gemäß dem vorbeschriebenen Prinzip.

Es versteht sich, daß auch hier Maßnahmen getroffen werden müssen, die ein selbsttätiges Rückstellen der Verstelleinrichtungen verhindern, um die eingestellte Fehlerkompensation im gewünschten Maße zu erhalten. Es können hier Feststellschrauben 3a gemäß Figur 1, aber auch Sperrklinken oder dgl. vorgesehen sein.

Für den Fall, daß die Werkstoffe des Meßteilungsträgers, der Basis und/oder der zu messenden Objekte unterschiedliche Ausdehnungskoeffizienten haben, oder wenn ein Gehäuse aus anderem Material vorgesehen ist, ist es vorteilhaft, die Verstelleinrichtungen ebenso wie die Befestigungseinrichtungen für den Meßteilungsträger von der Basis bzw. vom Gehäuse zu entkoppeln, was beispielseise durch federnde Lagerungen geschehen kann.

Wird der Meßteilungsträger als flexibles Band ausgeführt und über eine Trommel gespannt, so ist eine Winkelmeßeinrichtung entstanden, bei der die Kompensationseinrichtung in sinngemäßer Weise einsetzbar ist.

Auch Temperaturschwankungen können zu Fehlern der Meßteilung führen, die durch die vorgeschriebenen Kompensationseinrichtungen ausgeglichen werden. Durch ein direkt zwischengeschaltetes Getriebe kann die Temperaturkompensation selbsttätig erfolgen.

**Patentansprüche**

1. Längen- oder Winkelmeßeinrichtung zur Bestimmung der Lage zweier relativ zueinander beweglicher Objekte, mit einer Einrichtung zur Kompensation von Fehlern der Meßteilung und/oder der Führung der genannten Objekte durch Verändern der Länge der Meßteilung in Bezug auf eine Basis (1, 14, 15) wobei im Meßteilungsträger (5, 54, 55) entlang der Meßteilung zumindest partiell Ausnehmungen (4, 44, 45) vorgesehen sind in die Elemente zum Verändern der Länge der Meßteilung eingreifen dadurch gekennzeichnet, daß in der Basis (1, 14, 15) Verstelleinrichtungen (2a, 2b, 2a4, 2a5, 2b5) vorgesehen sind, die formschlüssig in die Ausnehmungen (4, 44, 45) längs des Meßteilungsträgers (5, 54, 55) eingreifen, und daß mittels der Verstelleinrichtungen (2a, 2b, 2a4, 2a5, 2b5) die Längen änderung der Meßteilung erfolgt.

2. Längen- oder Winkelmeßeinrichtung nach Anspruch 1, dadurch gekennzeichnet, daß der Meßteilungsträger (5, 54) perforiert ist, und daß in die Perforation (4, 44) Zahnräder (2a, 2b, 2a4) als Verstelleinrichtungen eingreifen.

3. Längen- oder Winkelmeßeinrichtung nach Anspruch 1, dadurch gekennzeichnet, daß die Längskanten des Meßteilungsträgers (55) eine Verzahnung (45) aufweisen, in die Ritzel (2a5, 2b5) als Verstelleinrichtungen eingreifen.

4. Längen- oder Winkelmeßeinrichtung nach Anspruch 1, dadurch gekennzeichnet, daß die Verstelleinrichtungen (2a, 2b, 2a4, 2a5, 2b5) dadurch Einstellscheiben (3) betätigt werden, die feststellbar sind.

5. Längen- oder Winkelmeßeinrichtung nach den Ansprüchen 1 und 2, dadurch gekennzeichnet, daß der Meßteilungsträger (5, 54) ein flexibles Stahlband ist.

6. Längen- oder Winkelmeßeinrichtung nach den Ansprüchen 1 und 3, dadurch gekennzeichnet, daß der Meßteilungsträger (55) ein biegesteifer Körper ist.

## Revendications

1. Dispositif de mesure de longueurs ou d'angles pour déterminer la position de deux objets mobiles l'un par rapport à l'autre comprenant des moyens pour la compensation d'erreurs de la graduation de mesure et/ou du guidage desdits objets par variation de la longueur de la graduation de mesure par rapport à une base (1, 14, 15), le support de graduation de mesure (5, 54, 55) comportant, le long de la graduation de mesure, au moins partiellement des évidements (4, 44, 45) dans lesquels s'engagent des éléments pour la variation de la longueur de la graduation de mesure, caractérisé par le fait que sur la base (1, 14, 15) sont prévus des moyens de réglage (2a, 2b, 2a4, 2a5, 2b5) qui s'engagent par complémentarité de forme dans les évidements (4, 44, 45) le long du support de graduation de mesure (5, 54, 55), et que la variation de longueur de la graduation de mesure s'effectue à l'aide des moyens de réglage (2a, 2b, 2a4, 2a5, 2b5).

2. Dispositif de mesure de longueurs ou d'angles suivant la revendication 1, caractérisé par le fait que le support de graduation de mesure (5, 54) est perforé et que des roues dentées (2a, 2b, 2a4) s'engagent en tant que moyens de réglage dans la perforation.

3. Dispositif de mesure de longueurs ou d'angles suivant la revendication 1, caractérisé par le fait que les bords longitudinaux du support de graduation de mesure (55) présentent une denture (45) dans laquelle des pignons (2a5, 2b5) s'engagent en tantque moyens de réglage.

4. Dispositif de mesure de longueurs ou d'angles suivant la revendication 1, caractérisé par le fait que les moyens de réglage (2a, 2b, 2a4, 2a5, 2b5) sont actionnés par des disques de réglage (3) susceptibles d'être bloqués.

5. Dispositif de mesure de longueurs ou d'angles suivant les revendications 1 et 2, caractérisé par le fait que le support de graduation de mesure (5, 54) est un ruban d'acier flexible.

6. Dispositif de mesure de longueurs ou d'angles suivant les revendications 1 et 3, caractérisé par le fait que le support de graduation de mesure (55) est un corps rigide en flexion.

## Claims

1. A linear or angular measurement device for determining the position of two objects movable relative to one another, with a device for compensating errors in calibration and/or the guidance of the said objects by alteration of the length of said calibration with reference to a base (1, 14, 15), there being guided at least partially in the index carrier (5, 54, 55) along the calibration, recesses (4, 44, 45), in which elements for altering the length of the measurement calibration engage, characterised in that there are provided in the base (1, 14, 15) adjusting devices (2a, 2b, 2a4, 2a5, 2b5), which engage form-lockingly in the recesses (4, 44, 45) along the index carrier (5, 54, 55) and that, by means of said adjusting devices (2a, 2b, 2a4, 2a5, 2b5), the alteration in length of the measurement calibration is achieved.

2. A linear or angular measurement device according to Claim 1, characterised in that the index carrier (5, 54) is perforated, and that gearwheels (2a, 2b, 2a4) serving as adjusting devices engage in the perforation (4, 44).

3. A linear or angular measurement device according to Claim 1, characterised in that the longitudinal edges of the index carrier (55) have a gear toothing system (45,) in which pinions (2a5, 2b5) engage as adjusting devices.

4. A linear or angular measurement device according to Claim 1, characterised in that the adjusting devices (2a, 2b, 2a4, 2a5, 2b5) are actuated by setting discs (3), which are securable.

5. A linear or angular measurement device according to Claims 1 and 2, characterised in that the index carrier (5, 54) is a flexible steel tape.

6. A linear or angular measurement device according to Claims 1 and 3, characterised in that the index carrier (55) is a rigid body.

**Fig. 1**

_Fig.2_

_Fig.3_

Fig. 4

## *Fig.5*

## *Fig.5a*

4